(19) Europäisches Patentamt
European Patent Office
Office européen des brevets

(11) Numéro de publication : **0 050 074**
**B1**

(12) **FASCICULE DE BREVET EUROPÉEN**

(45) Date de publication du fascicule du brevet : **04.07.84**

(51) Int. Cl.³ : **C 07 C 69/74**, C 07 C 67/333, A 01 N 53/00

(21) Numéro de dépôt : **81401520.2**

(22) Date de dépôt : **02.10.81**

(54) **Nouveaux esters méthyliques dérivés de l'acide 2,2-diméthyl cyclopropane 1,3-dicarboxylique, leur préparation et les intermédiaires nouveaux obtenus.**

(30) Priorité : **10.10.80 FR 8021690**

(43) Date de publication de la demande :
**21.04.82 Bulletin 82/16**

(45) Mention de la délivrance du brevet :
**04.07.84 Bulletin 84/27**

(84) Etats contractants désignés :
**AT BE CH DE GB IT LI LU NL SE**

(56) Documents cités :
**BE-A- 862 461**
**JOURNAL OF THE AMERICAN CHEMICAL SOCIETY, vol. 76, no. 20, 20 octobre 1954 American Chemical Society (US) E.J. COREY et al.: "Formation of bicyclo (4.1.0) heptane derivatives from eucarvone" pages 5257-5258**

(73) Titulaire : **ROUSSEL-UCLAF**
**35, boulevard des Invalides**
**F-75007 Paris (FR)**

(72) Inventeur : **Krief, Alain**
**16, rue Tienne aux Clochers**
**B-5150 Wepion (BE)**

(74) Mandataire : **Douetteau, Pierre et al**
**ROUSSEL-UCLAF 111, route de Noisy Boîte postale no. 9**
**F-93230 Romainville (FR)**

**EP 0 050 074 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne de nouveaux esters méthyliques dérivés de l'acide 2,2-diméthyl cyclopropane 1,3-dicarboxylique ainsi que leur procédé de préparation et les intermédiaires nouveaux obtenus.

L'invention a ainsi pour objet les composés répondant à la formule I :

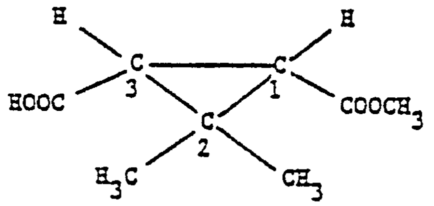

(I)

de configuration cis, sous leurs formes optiquement actives.

L'invention a donc pour objet les mono esters méthylliques des acides (1R, 3S) et (1S, 3R) cis 2,2-diméthyl cyclopropane-1, 3-dicarboxyliques.

L'invention a également pour objet un procédé de préparation des composés de formule I, telle que définie ci-dessus, de configuration cis, ainsi que de configuration trans, caractérisé en ce que l'on salifie le mono ester méthylique de l'acide (1RS, 3SR) cis 2,2-diméthyl cyclopropane 1,3-dicarboxylique par la (d) ou la (l) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement, le mono ester méthylique de l'acide (1R, 3S)cis ou de l'acide (1S, 3R)cis 2,2-diméthyl cyclopropane 1,3-dicarboxylique, puis, le cas échéant, l'isomérise par action d'une base forte, pour obtenir respectivement le mono ester méthylique de l'acide (1S, 3S)trans ou de l'acide (1R, 3R)trans 2,2-diméthyl cyclopropane 1,3-dicarboxylique.

L'invention a donc notamment pour objet un procédé de préparation des composés de formule I, tels que définis ci-dessus, de configuration cis, caractérisé en ce que l'on salifie le mono ester méthylique de l'acide (1RS, 3SR)cis 2,2-diméthyl cyclopropane 1,3-dicarboxylique par la (d) ou la (l) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement, le mono ester méthylique de l'acide (1R, 3S)cis ou de l'acide (1S, 3R)cis 2,2-diméthyl cyclopropane 1,3-dicarboxylique, ainsi qu'un procédé de préparation des composés de formule I, tels que définis ci-dessus, de configuration trans, caractérisé en ce que l'on salifie le mono ester méthylique de l'acide (1RS, 3SR) cis 2,2-diméthyl cyclopropane 1,3-dicarboxylique par la (d) ou la (l) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement, le mono ester méthylique de l'acide (1R, 3S)cis ou de l'acide (1S, 3R)cis 2,2-diméthyl cyclopropane 1,3-dicarboxylique que l'on isomérise par action d'une base forte, pour obtenir respectivement le mono ester méthylique de l'acide (1S, 3S)trans ou de l'acide (1R, 3R)trans 2,2-diméthyl cyclopropane 1,3-dicarboxylique.

Dans un mode d'exécution préféré du procédé de l'invention,

— la salification est effectuée au sein de l'acétone ;

— la cristallisation du sel dans l'acétone est effectuée en deux étapes successives ;

— la base minérale est le carbonate de potassium, le carbonate de sodium, la soude diluée ou la potasse diluée ;

— l'acide utilisé après le traitement par une base minérale peut être un acide minéral dilué, tel que l'acide chlorhydrique ou l'acide sulfurique dilué ;

— la base forte est un alcoolate alcalin, tel que le méthylate ou l'éthylate de sodium ou le terbutylate de potassium ou un hydrure alcalin et l'on opère au sein d'un alcool ou d'un éther.

L'invention a enfin pour objet, à titre de produits intermédiaires nouveaux, nécessaires dans l'exécution du procédé ci-dessus, les sels de d et l α-méthyl benzylamine des mono esters méthyliques des acides (1R, 3S)cis et (1S, 3R)cis 2,2-diméthyl cyclopropane 1,3-dicarboxyliques.

Le dédoublement d'esters d'acides cis cyclopropane 1,3-dicarboxyliques n'a jamais été réalisé à ce jour. L'intérêt du procédé réside dans le fait que le dédoublement qui n'est pas possible dans le cas du diacide lui-même devient possible dans le cas d'un mono ester à cause de l'existence d'énantiomères due à la dissymétrie de la molécule.

De même, le passage d'un dérivé cyclopropane dicarboxylique cis au dérivé trans correspondant n'a jamais été décrit à ce jour. Le procédé de l'invention montre que, de manière inattendue, il est possible d'isomériser un composé de formule I de configuration (1R, 3S) ou (1S, 3R)cis en un composé analogue (1S, 3S) ou (1R, 3R)trans par traitement à l'aide d'une base forte sans qu'une saponification de l'ester ou une racémisation au moins notable n'intervienne. Le schéma figurant ci-joint explicite l'ensemble des transformations réalisées.

Les composés de formule I sont des composés intermédiaires, par exemple dans la synthèse des dérivés chrysanthémiques correspondants. Il est en effet possible, à partir des composés I, par une suite de réactions comprenant une réduction de la fonction acide, puis une oxydation de l'alcool obtenu en aldéhyde et enfin une réaction de Wittig à l'aide d'un halogénure de triphényl isopropyl phosphonium, d'obtenir l'ester chrysanthémique méthylique dont la configuration est celle du composé I utilisé.

Un exemple de préparation du (1R, 3S)cis chrysanthémate de méthyle au départ du mono ester méthylique de l'acide (1R, 3S)cis 2,2-diméthyl cyclopropane 1,3-dicarboxylique est donné ci-après dans la partie expérimentale.

Une suite de réactions de ce type s'appliquant à des composés racémiques a déjà été décrite par la société demanderesse dans le brevet belge n° 862 461.

Il est bien connu que les esters chrysanthémiques ainsi obtenus sont eux-mêmes des intermédiaires dans la synthèse d'autres esters connus possédant des propriétés pesticides notamment insecticides.

Le mono ester méthylique de l'acide (1RS, 3SR)cis 2,2-diméthyl cyclopropane 1,3-dicarboxylique est décrit par exemple dans Am. Soc. *76,* 5257 (1954).

Les exemples suivants illustrent l'invention sans toutefois la limiter.

Exemple 1

Dédoublement du mono ester méthylique de l'acide (1RS, 3SR)cis 2,2-diméthyl cyclopropane 1,3-dicarboxylique.

a) isolement du mono ester de l'acide (1R, 3S)cis

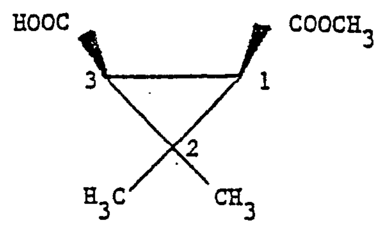

On met en solution dans 100 $cm^3$ d'acétone, 5,26 g de mono ester méthylique de l'acide (1RS, 3SR) cis 2,2-diméthyl cyclopropane 1,3-dicarboxylique, ajoute 3,7 g de d (+)α-méthyl benzylamine puis maintient au repos à température ambiante pendant 4 jours et filtre les cristaux formés. On évapore à sec le filtrat et le reprend à l'acétone. On laisse au repos pendant 24 heures et filtre les cristaux formés que l'on joint à ceux précédemment obtenus. Le filtrat A est conservé.

On dissout ces cristaux dans l'acétone, puis après avoir initié la cristallisation, laisse au repos pendant 3 jours. On filtre les cristaux formés, les sèche et obtient 1,69 g de sel attendu.

On dissout le sel dans l'eau, ajoute 1,03 g de carbonate de potassium, lave la phase aqueuse à l'éther, l'acidifie légèrement par addition d'acide chlorhydrique à 10 %, extrait à l'éther, lave la phase étherée à l'eau puis à l'eau salée, la sèche et évapore le solvant. On obtient 1 g de mono ester méthylique de l'acide (1R, 3S)cis 2,2-diméthyl cyclopropane 1,3-dicarboxylique, $/\alpha/_D^{25} = + 30{,}92°$ (Ethanol), F = 54 °C, qui se révèle être un mélange renfermant 94,23 % de mono ester de l'acide (1R, 3S)cis et 5,77 % de mono ester de l'acide (1S, 3R)cis.

b) isolement du mono ester de l'acide (1S, 3R)cis

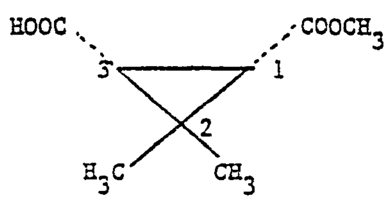

(1S, 3R)

On évapore à sec le filtrat A obtenu précédemment, puis le traite comme décrit ci-dessus pour obtenir l'acide correspondant, qui se révèle être un mélange renfermant 57 % de mono ester de l'acide (1S, 3R)cis et 43 % de mono ester de l'acide (1R, 3S)cis.

On traite cet acide (2,56 g) par 1,8 g de 1 (−) α-méthyl benzylamine puis poursuit les opérations comme décrit précédemment dans la préparation de l'acide (1R, 3S)cis. On obtient finalement 0,813 g d'acide (1S, 3R)cis attendu, $/\alpha/_D^{25} = - 29{,}3°$ (Ethanol) F = 53 °C, qui se révèle être un mélange renfermant 92 % de mono ester de l'acide (1S, 3R)cis et 8 % de mono ester de l'acide (1R, 3S)cis.

Spectre RMN ($CDCl_3$)

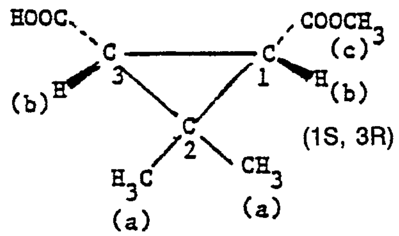

(1S, 3R)

$\Delta H_{(a)}$ = singulet à 1,28 ppm
singulet à 1,40 ppm
$\Delta H_{(b)}$ = singulet à 1,96 ppm
$\Delta H_{(c)}$ = singulet à 3,70 ppm

Exemple 2

Isomérisation du mono ester méthylique de l'acide (1S, 3R)cis 2,2-diméthyl cyclopropane 1,3-dicarboxylique en l'ester d'acide (1S, 3R)trans correspondant

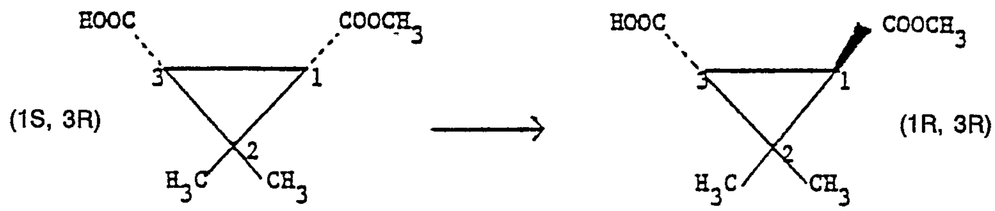

(1S, 3R) (1R, 3R)

On mélange sous gaz inerte 0,516 g de mono ester méthylique de l'acide (1S, 3R)cis 2,2-diméthyl cyclopropane 1,3-dicarboxylique et 3 $cm^3$ d'une solution 5M de méthylate de sodium dans le méthanol. On porte au reflux pendant 75 minutes, laisse revenir à température ambiante puis ajoute de l'acide chlorhydrique à 10 % ($pH_2$). On extrait à l'éther, lave la phase étherée à l'eau puis avec une solution aqueuse saturée de chlorure de sodium, sèche et évapore le solvant. On obtient 0,36 g de mono ester méthylique de l'acide (1R, 3R)trans attendu. $/\alpha/_D^{25} = -51{,}65°$ (Ethanol).

Spectre RMN ($CDCl_3$)

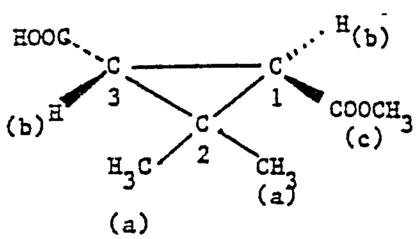

$\Delta H_{(a)}$ = singulet à 1,28 ppm
singulet à 1,31 ppm
$\Delta H_{(b)}$ = singulet à 2,23 ppm
$\Delta H_{(c)}$ = singulet à 3,70 ppm

Exemple 3

Isomérisation du mono ester méthylique de l'acide (1R, 3S)cis 2,2-diméthyl cyclopropane 1,3-dicarboxylique en l'ester d'acide (1S, 3S)trans correspondant

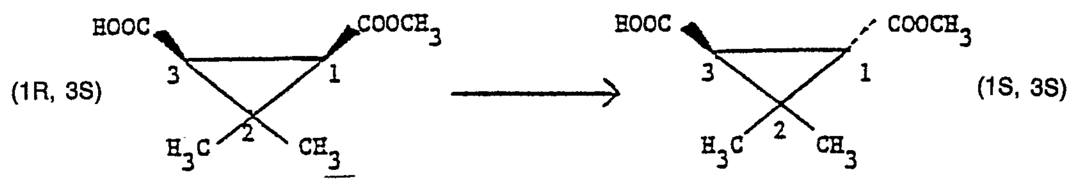

(1R, 3S) (1S, 3S)

On opère de manière analogue à celle décrite à l'exemple 2 au départ du mono ester de l'acide (1R, 3S)cis et obtient le mono ester de l'acide (1S, 3S)trans attendu. $/\alpha/_D^{25} = +51{,}66°$ (Ethanol)

Exemple 4

Application du mono ester méthylique de l'acide (1R, 3S)cis 2,2-diméthyl cyclopropane 1,3-dicarboxylique à la préparation de l'ester méthylique de l'acide chrysanthémique correspondant.

Stade A : Ester méthylique de l'acide (1R, 3S)cis 2,2-diméthyl 3-hydroxyméthyl cyclopropane-1-carboxylique.

On dissout 0,8 g de mono ester méthylique de l'acide (1R, 3S)cis 2,2-diméthyl cyclopropane 1,3-

dicarboxylique dans 20 $cm^3$ d'éther puis ajoute lentement sous atmosphère inerte 0,348 g de diborane dans le diméthyl sulfure ($5,05 \times 10^{-3}$ mole). On porte au reflux pendant une heure puis laisse revenir à température ambiante, ajoute 2 $cm^3$ de méthanol puis 10 $cm^3$ d'acide chlorhydrique à 10 %. On extrait à l'éther, lave la phase étherrée à l'eau, puis avec une solution aqueuse saturée de chlorure de sodium et sèche. On évapore le solvant et purifie le résidu sur silice (éluant : éther (RF = 0,7)). On obtient 0,57 g de produit attendu. $/\alpha/_D^{25} = -73,76°$ (Ethanol)

Spectre IR

Absorption de 3 050 à 3 700 $cm^{-1}$ (OH)

Spectre RMN ($CCl_4$)

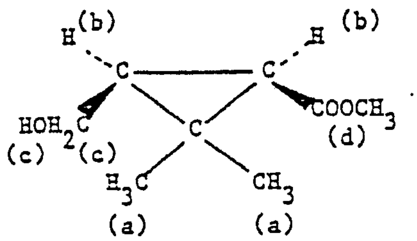

(1R, 3S)

$\Delta H_{(a)}$ = singulet à 1,16 ppm
$\Delta H_{(b)}$ = multiplet de 1,24 à 1,56 ppm
$\Delta H_{(c)}$ = massif à 3,20 ppm
$\Delta H_{(d)}$ = singulet à 3,57 ppm
$\Delta H_{(e)}$ = doublet centré sur 3,78 ppm (J = 7 Hz)

Stade B : Ester méthylique de l'acide (1R, 3S)cis 2,2-diméthyl 3-formyl cyclopropane-1-carboxylique.

On met en suspension 1,105 g de complexe anhydride chromique-chlorhydrate de pyridine ($5,18 \times 10^{-3}$ mole) dans 7 $cm^3$ de chlorure de méthylène puis ajoute 0,54 g de produit préparé au stade A en solution dans 7 $cm^3$ de chlorure de méthylène et maintient sous agitation pendant 3 heures. On ajoute ensuite 7 $cm^3$ d'éther, maintient sous agitation pendant 2 heures, filtre, lave plusieurs fois le produit filtré à l'éther, récupère le filtrat, évapore le solvant et purifie le résidu sur silice (éluant : éther-pentane 8/2 (Rf = 0,85)). On obtient 0,48 g de produit attendu. $/\alpha/_D^{25} = -82,15°$ (Acétone).

Spectre IR :

Absorption à 1 730 $cm^{-1}$ (C = 0 ester) et 1 700 $cm^{-1}$ (C = 0 aldéhyde)

Spectre RMN ($CCl_4$)

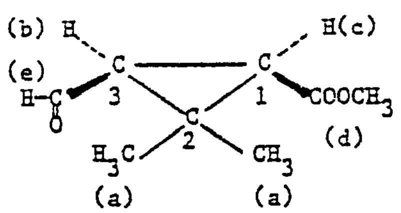

(1R, 3S)

$\Delta H_{(a)}$ = singulet à 1,24 ppm
singulet à 1,49 ppm
$\Delta H_{(b)}$ = doublet centré sur 1,7 ppm
J b, c = 8 Hz J b, e = 6 Hz
$\Delta H_{(c)}$ = doublet centré sur 2,01 ppm
J = 8Hz
$\Delta H_{(d)}$ = singulet à 3,65 ppm
$\Delta H_{(e)}$ = doublet centré sur 9,58 ppm
J = 6Hz

Stade C : (1R, 3S)cis chrysanthémate de méthyle

On met en suspension, sous atmosphère inerte, 1,08 g d'iodure d'isopropyl triphényl phosphonium dans 10 $cm^3$ de tétrahydrofuranne. On ajoute 1,5 $cm^3$ d'une solution 1,6 N de butyl lithium dans l'hexane. On agite pendant 10 minutes puis ajoute 0,34 g de produit préparé au Stade B. On agite pendant 30 minutes, ajoute de l'eau, extrait à l'éther, lave la phase éthérée à l'eau, puis avec une solution aqueuse saturée de chlorure de sodium et la sèche. On évapore le solvant et purifie le résidu sur silice (éluant éther-pentane 1/9. Rf = 0,75). On obtient 0,19 g de produit attendu. $/\alpha/_D^{25} = +57,848$ (Acétone).

**Revendications** (pour les Etats contractants BE, CH, DE, GB, IT, LI, LU, NL, SE)

1. Les composés répondant à la formule I :

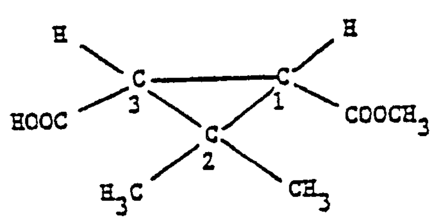

(I)

de configuration cis sous leurs formes optiquement actives, à savoir les mono esters méthyliques des

acides (1R, 3S) et (1S, 3R)cis 2,2-diméthyl cyclopropane 1,3-dicarboxyliques.

2. Procédé de préparation des composés de formule I telle que définie à la revendication 1 de configuration cis, ainsi que de configuration trans, caractérisé en ce que l'on salifie le mono ester méthylique de l'acide (1RS, 3SR)cis 2,2-diméthyl cyclopropane 1,3-dicarboxylique par la (d) ou la (1) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement le mono ester méthylique de l'acide (1R, 3S)cis ou de l'acide (1S, 3R)cis 2,2-diméthyl cyclopropane 1,3-dicarboxylique, puis, le cas échéant, l'isomérise par action d'une base forte, pour obtenir respectivement le mono ester méthylique de l'acide (1S, 3S)trans ou de l'acide (1R, 3R) trans 2,2-diméthyl cyclopropane 1,3-dicarboxylique.

3. Procédé selon la revendication 2, caractérisé en ce que

— la salification est effectuée au sein de l'acétone ;

— la cristallisation du sel dans l'acétone est effectuée en deux étapes successives ;

— la base minérale est le carbonate de potassium, le carbonate de sodium, la soude diluée ou la potasse diluée ;

— la base forte est un alcoolate alcalin, tel que le méthylate de sodium ou le terbutylate de potassium ou un hydrure alcalin et l'on opère au sein d'un alcool ou d'un éther.

4. A titre de produits intermédiaires nouveaux, nécessaires dans l'exécution du procédé selon la revendication 2 ou 3, les sels de d et 1 α-méthyl benzylamine des mono esters méthyliques des acides (1R, 3S)cis et (1S, 3R)cis 2,2-diméthyl cyclopropane 1,3-dicarboxyliques.

**Revendications** (pour l'Etat contractant AT)

1. Procédé de préparation des composés répondant à la formule (I) :

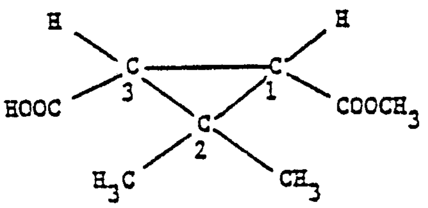

(I)

de configuration cis ou trans, sous leurs formes optiquement actives, caractérisé en ce que l'on salifie le mono ester méthylique de l'acide (1RS, 3SR)cis 2,2-diméthyl cyclopropane 1,3-dicarboxylique par la (d) ou la (l) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement le mono ester méthylique de l'acide (1R, 3S)cis ou de l'acide (1S, 3R)cis 2,2-diméthyl cyclopropane 1,3-dicarboxylique, puis le cas échéant, l'isomérise par action d'une base forte, pour obtenir respectivement le mono ester méthylique de l'acide (1S, 3S) trans ou de l'acide (1R, 3R)trans 2,2-diméthyl cyclopropane 1,3-dicarboxylique.

2. Procédé selon la revendication 1, caractérisé en ce que

— la salification est effectuée au sein de l'acétone ;

— la cristallisation du sel dans l'acétone est effectuée en deux étapes successives ;

— la base minérale est le carbonate de potassium, le carbonate de sodium, la soude diluée ou la potasse diluée ;

— la base forte est un alcoolate alcalin, tel que le méthylate de sodium, l'éthylate de sodium ou le terbutylate de potassium, et l'on opère au sein d'un alcool.

3. Procédé selon la revendication 1, caractérisé en ce que la base forte est un alcoolate alcalin, tel que le méthylate ou l'éthylate de sodium ou le terbutylate de potassium ou un hydrure alcalin et l'on opère au sein d'un alcool ou d'un éther.

4. Procédé selon la revendication 1, pour préparer les mono esters méthyliques des acides (1R, 3S) et (1S, 3R)cis 2,2-diméthyl cyclopropane 1,3-dicarboxyliques, caractérisé en que l'on salifie le mono ester méthylique de l'acide (1RS, 3SR)cis 2,2-diméthyl cyclopropane 1,3-dicarboxylique par la (d) ou la (1) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement le mono ester méthylique de l'acide (1R, 3S)cis ou de l'acide (1S, 3R)cis 2,2-diméthyl cyclopropane 1,3-dicarboxylique.

5. Procédé selon la revendication 1, pour préparer les mono esters méthyliques des acides (1R, 3R) et (1S, 3S) trans 2,2-diméthyl cyclopropane 1,3-dicarboxyliques, caractérisé en ce que l'on salifie le mono ester méthylique de l'acide (1RS, 3SR)cis 2,2-diméthyl cyclopropane 1,3-dicarboxylique par la (d) ou la (l) α-méthyl benzylamine, isole le sel cristallisé formé, le solubilise dans l'eau, traite par une base minérale puis par un acide et isole, selon que l'on a utilisé la (d) ou la (l) α-méthyl benzylamine, respectivement le

mono ester méthylique de l'acide (1R, 3S)cis ou de l'acide (1S, 3R) cis 2,2-diméthyl cyclopropane 1,3-dicarboxylique, puis l'isomérise par action d'une base forte, pour obtenir respectivement le mono ester méthylique de l'acide (1S, 3S)trans ou de l'acide (1R, 3R)trans 2,2-diméthyl cyclopropane 1,3-dicarboxylique.

**Claims** (for the Contracting States : BE, CH, DE, GB, IT, LI, LU, NL, SE)

1. Compounds corresponding to the formula (I) :

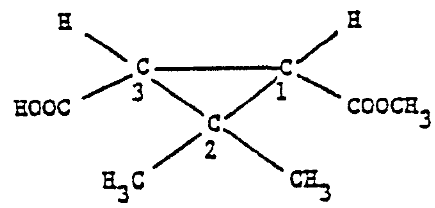

(I)

of cis configuration, in their optically active forms, namely the mono methyl esters of (1R, 3S) and (1S, 3R) cis 2,2-dimethyl cyclopropane-1,3-dicarboxylic acids.

2. Preparation process for the compounds with the formula (I) as defined in Claim 1, with cis configuration, as well as with trans configuration, characterized in that the mono methyl ester of (1RS, 3SR)cis 2,2-dimethyl cyclopropane-1,3-dicarboxylic acid is salified by the (d) or the (l) α-methylbenzylamine, the crystallized salt formed is isolated, and made soluble in water then treated with a mineral base then with an acid and, depending on whether the (d) or the (l) α-methylbenzylamine is used, the mono methyl ester of (1R, 3S)cis or (1S, 3R)cis 2,2-dimethyl cyclopropane-1,3-dicarboxylic acids respectively, is isolated then, if applicable, is isomerized by the action of a strong base so as to obtain the mono methyl ester of (1S, 3S)trans or the (1R, 3R)trans 2,2-dimethyl cyclopropane-1,3-dicarboxylic acids respectively.

3. Process according to Claim 2, characterized in that
— salification is carried out in acetone ;
— crystallization of the salt in acetone is carried out in two successive stages ;
— the mineral base is potassium carbonate, sodium carbonate, dilute sodium hydroxide or dilute potassium hydroxide ;
— the strong base is an alkaline alcoholate, such as sodium methylate or potassium tertbutylate or an alkaline hydride and the operation is carried out in an alcohol or an ether.

4. As new intermediate products, necessary for the execution of the process according to Claim 2 or 3, the salts of (d) and (l) α-methylbenzylamine of the mono methyl esters of the (1R, 3S)cis and (1S, 3R)cis 2,2-dimethyl cyclopropane-1,3-dicarboxylic acids.

**Claims** (for the Contracting State AT)

1. Preparation process for the compounds corresponding to the formula (I) :

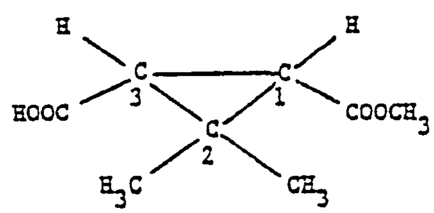

(I)

of cis or trans configuration, in their optically active forms, characterized in that the mono methyl ester of (1RS, 3SR)cis 2,2-dimethyl cyclopropane-1,3dicarboxylic acid is salified by the (d) or the (l) α-methylbenzylamine, the crystallized salt formed is isolated, made soluble in water, treated with a mineral base then with an acid and, depending on whether the (d) or the (l) α-methylbenzylamine has been used, the mono methyl ester of (1R, 3S)cis or (1S, 3R)cis 2,2-dimethylcyclopropane-1,3-dicarboxylic acids respectively, is isolated, then if applicable, is isomerized by the action of a strong base in order to obtain the mono methyl ester of (1S, 3S)trans or (1R, 3R)trans 2,2-dimethyl cyclopropane-1,3-dicarboxylic acids respectively.

2. Process according to Claim 1, characterized in that
— salification is carried out in acetone ;
— crystallization of the salt in acetone is carried out in two successive stages ;
— the mineral base is potassium carbonate, sodium carbonate, dilute sodium hydroxide or dilute potassium hydroxide,

— the strong base is an alkaline alcoholate, such as sodium methylate, sodium ethylate or potassium tertbutylate and the operation is carried out in an alcohol.

3. Process according to Claim 1, characterized in that the strong base is an alkaline alcoholate, such as sodium methylate or ethylate or potassium tertbutylate or an alkaline hydride and the operation is carried out in an alcohol or an ether.

4. Process according to Claim 1, for preparing the mono methyl esters of (1R, 3S) and (1S, 3R) cis 2,2-dimethyl cyclopropane-1,3-dicarboxylic acids, characterized in that the mono methyl ester of (1RS, 3SR) cis 2,2-dimethyl cyclopropane-1,3-dicarboxylic acids is salified by the (d) or the (l) α-methylbenzylamine, the crystallized salt formed is isolated then made soluble in water and treated with a mineral base then with an acid and, depending on whether the (d) or the (l) α-methylbenzylamine is used, the mono methyl ester of (1R, 3S)cis or (1S, 3R)cis 2,2-dimethyl cyclopropane-1,3-dicarboxylic acid respectively is isolated.

5. Process according to Claim 1, for preparing the mono methyl esters of (1R, 3R) and (1S, 3S)trans 2,2-dimethyl cyclopropane-1,3-dicarboxylic acids, characterized in that the mono methyl ester of (1RS, 3SR)cis 2,2-dimethyl cyclopropane-1,3-dicarboxylic acid is salified by the (d) or the (l) α-methylbenzylamine, the crystallized salt formed is isolated and made soluble in water and treated with a mineral base then with an acid and, depending on whether the (d) or the (l) α-methylbenzylamine is used, the mono methyl ester of (1R, 3S)cis or (1S, 3R)cis 2,2-dimethyl cyclopropane-1,3-dicarboxylic acid respectively is isolated, then is isomerized by the action of a strong base so as to obtain the methyl ester of (1S, 3S)trans or (1R, 3R)trans 2,2-dimethyl cyclopropane-1,3-dicarboxylic acid respectively.

**Ansprüche** (für die Vertragsstaaten : BE, CH, DE, GB, IT, LI, LU, NL, SE)

1. Verbindungen der Formel (I)

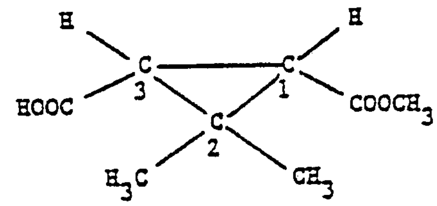

(I)

mit cis-Konfiguration in ihren optisch aktiven Formen, nämlich die Monomethylester der (1R, 3S)- und (1S, 3R)-cis-2,2-Dimethyl-cyclopropan-1,3-dicarbonsäuren.

2. Verfahren zur Herstellung der Verbindungen der Formel (I) gemäß Anspruch 1 mit cis-Konfiguration sowie mit trans-Konfiguration, dadurch gekennzeichnet, daß man den Monomethylester der (1RS, 3SR)-cis-2,2-Dimethyl-cyclopropan-1,3-dicarbonsäure mit (d)- oder (l)-α-Methylbenzylamin in ein Salz überführt, das gebildete, kristallisierte Salz isoliert, es in Wasser löst, mit einer mineralischen Base und danach mit einer Säure behandelt und, jenachdem ob man (d)- oder (l)-α-Methylbenzylamin verwendet hat, den Monomethylester der (1R, 3S)-cis- oder der (1S, 3R)-cis-2,2-Dimethyl-cyclopropan-1,3-dicarbonsäure isoliert und ihn danach gegebenenfalls durch Einwirken einer starken Base isomerisiert, um den Monomethylester der (1S, 3S)-trans- bzw. der (1R, 3R)-trans-2,2-Dimethyl-cyclopropan-1,3-dicarbonsäure zu erhalten.

3. Verfahren gemäß Anspruch 2, dadurch gekennzeichnet, daß

— die Salzbildung in einem Aceton-Medium erfolgt ;

— die Kristallisation des Salzes in Aceton in zwei aufeinanderfolgenden Stufen durchgeführt wird ;

— die mineralische Base Kaliumcarbonat, Natriumcarbonat, verdünnte Natronlauge oder verdünnte Kalilauge ist ;

— die starke Base ein Alkalialkoholat, wie Natriummethylat oder Kalium-tert.-butylat, oder ein Alkalihydrid ist und man in dem Medium eines Alkohols oder eines Ethers arbeitet.

4. Als neue Zwischenprodukte, die für die Durchführung des Verfahrens gemäß Anspruch 2 oder 3 erforderlich sind, die Salze des (d)- oder (l)-α-Methylbenzylamins der Monomethylester der (1R, 3S)-cis- und (1S, 3R)-cis-2,2-Dimethyl-cyclopropan-1,3-dicarbonsäuren.

**Ansprüche** (für den Vertragsstaat AT)

1. Verfahren zur Herstellung der Verbindungen der Formel (I)

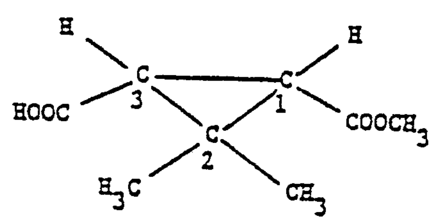

(I)

mit cis- oder trans-Konfiguration in ihren optisch aktiven Formen, dadurch gekennzeichnet, daß man den Monomethylester der (1RS, 3SR)-cis-2,2-Dimethylcyclopropan-1,3-dicarbonsäure mit (d)- oder (l)-α-Methylbenzylamin in ein Salz überführt, das gebildete, kristallisierte Salz isoliert, es in Wasser löst, mit einer mineralischen Base und dann mit einer Säure behandelt und, jenachdem ob man (d)- oder (l)-α-Methylbenzylamin verwendet hat, den Monomethylester der (1R, 3S)-cis- oder der (1S, 3R)-cis-2,2-Dimethyl-cyclopropan-1,3-dicarbonsäure isoliert und dann gegebenenfalls ihn durch Einwirken einer starken Base isomerisiert, um den Monomethylester der (1S, 3S)-trans- bzw. der (1R, 3R)-trans-2,2-Dimethyl-cyclopropan-1,3-dicarbonsäure zu erhalten.

2. Verfahren gemäß Anspruch 1, dadurch gekennzeichnet, daß

— die Salzbildung in einem Aceton-Medium durchgeführt wird ;

— die Kristallisation des Salzes in Aceton in zwei aufeinanderfolgenden Stufen durchgeführt wird ;

— die mineralische Base Kaliumcarbonat, Natriumcarbonat, verdünnte Natronlauge oder verdünnte Kalilauge ist ;

— die starke Base ein Alkalialkoholat, wie Natriummethylat, Natriumethylat oder Kalium-tert.-butylat, ist und man in dem Medium eines Alkohols arbeitet.

3. Verfahren gemäß Anspruch 1, dadurch gekennzeichnet, daß die starke Base ein Alkalialkoholat, wie Natriummethylat oder -ethylat oder Kalium-tert.-butylat, oder ein Alkalihydrid ist und man in dem Medium eines Alkohols oder eines Ethers arbeitet.

4. Verfahren gemäß Anspruch 1 zur Herstellung der Monomethylester der (1R, 3S)- und (1S, 3R)-cis-2,2-Dimethyl-cyclopropan-1,3-dicarbonsäuren, dadurch gekennzeichnet, daß man den Monomethylester der (1RS, 3SR)-cis-2,2-Dimethyl-cyclopropan-1,3-dicarbonsäure mit (d)- oder (1)-α-Methylbenzylamin in ein Salz überführt, das gebildete, kristallisierte Salz isoliert, es in Wasser löst, mit einer mineralischen Base und danach mit einer Säure behandelt und, jenachdem ob man (d)- oder (l)-α-Methylbenzylamin verwendet hat, den Monomethylester der (1R, 3S)-cis- bzw. (1S, 3R)-cis-2,2-Dimethyl-cyclopropan-1,3-dicarbonsäure isoliert.

5. Verfahren gemäß Anspruch 1 zur Herstellung der Monomethylester der (1R, 3R)- und (1S, 3S)-trans-2,2-Dimethyl-cyclopropan-1,3-dicarbonsäuren, dadurch gekennzeichnet, daß man den Monomethylester der (1RS, 3SR)-cis-2,2-Dimethyl-cyclopropan-1,3-dicarbonsäure mit (d)- oder (l)-α-Methylbenzylamin in ein Salz überführt, das gebildete, kristallisierte Salz isoliert, es in Wasser löst, mit einer mineralischen Base und danach mit einer Säure behandelt und, jenachdem ob man (d)- oder (l)-α-Methylbenzylamin verwendet hat, den Monomethylester der (1R, 3S)-cis- bzw. der (1S, 3R)-cis-2,2-Dimethyl-cyclopropan-1,3-dicarbonsäure isoliert und ihn dann durch Einwirken einer starken Base isomerisiert, um den Monomethylester der (1S, 3S)-trans- bzw. der (1R, 3R)-trans-2,2-Dimethyl-cyclopropan-1,3-dicarbonsäure zu erhalten.

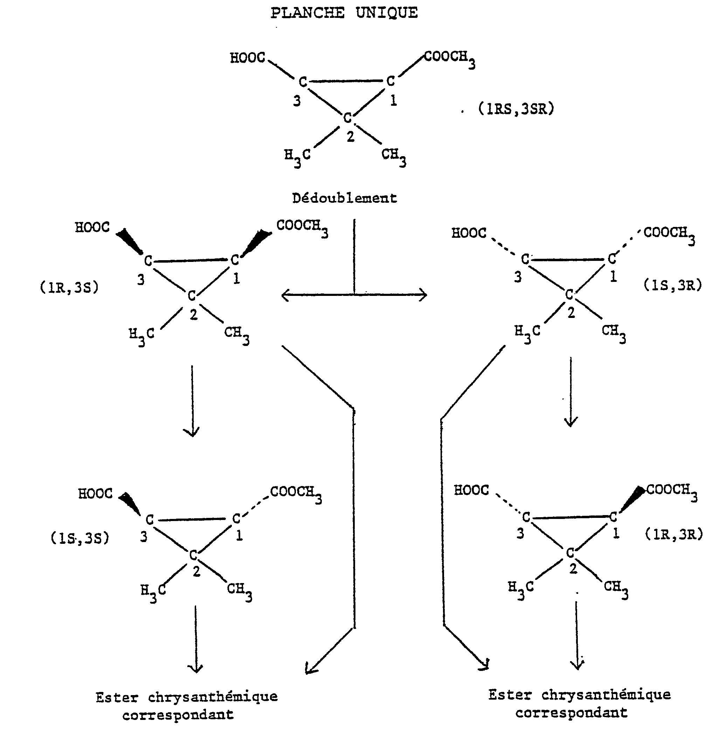

# PLANCHE UNIQUE